**Europäisches Patentamt**

**European Patent Office**

**Office européen des brevets**

(19)

(11) Veröffentlichungsnummer: **0 085 779**
**B1**

(12)

# EUROPÄISCHE PATENTSCHRIFT

(45) Veröffentlichungstag der Patentschrift:
**05.11.86**

(21) Anmeldenummer: **82111886.6**

(22) Anmeldetag: **21.12.82**

(51) Int. Cl.⁴: **B 01 D 33/00,** B 01 D 15/02,
C 02 F 1/28, B 01 J 8/00

(54) **Vorrichtung und Verfahren zum kontinuierlichen Kontaktieren einer flüssigen Phase mit einer festen Phase im Gegenstrom.**

(30) Priorität: **30.01.82 DE 3203181**

(43) Veröffentlichungstag der Anmeldung:
**17.08.83 Patentblatt 83/33**

(45) Bekanntmachung des Hinweises auf die Patenterteilung:
**05.11.86 Patentblatt 86/45**

(84) Benannte Vertragsstaaten:
**BE DE FR GB NL**

(56) Entgegenhaltungen:
**DE-A-2 433 598
FR-A-445 352
FR-A-2 080 950
FR-A-2 281 321
FR-A-2 329 321**

**Seifen-Öle-Fette-Wachse- 108. Jg.- Nr. 8/1982,
Verlag für chem. Industrie, Augsburg, Seiten 237-239**

(73) Patentinhaber: **Degussa Aktiengesellschaft,
Weissfrauenstrasse 9, D-6000 Frankfurt am Main
1 (DE)**

(72) Erfinder: **Semmerau, Gisbert, Mittelweg 7, D-6361
Reichelsheim 2 (DE)**
Erfinder: **Schirrmacher, Rüdiger, Philip-
Reisstrasse 1, D-6450 Hanau (DE)**

(74) Vertreter: **Weber, Wolfgang, Degussa AG
Fachbereich Patente Rodenbacher Chaussee 4
Postfach 1345, D-6450 Hanau (DE)**

## Beschreibung

Die Erfindung betrifft eine Vorrichtung zum kontinuierlichen Kontaktieren einer flüssigen Phase mit einer festen Phase im Gegenstrom, bestehend aus einer Säule (1), einem an der Säule angeordneten Anströmring (2) für die flüssige Phase, einem konischen Säulenboden (3), einer Austragsöffnung (4) für die feste Phase unterhalb des Anströmringes (2) für die flüssige Phase sowie einer mit der Austragsöffnung (4) für die feste Phase in Verbindung stehenden Mammutpumpe (7) und einem überlauf (9) für die flüssige Phase.

Es ist bekannt, flüssige Phasen mit festen Phasen zu kontaktieren. So werden beispielsweise Abwässer, die mit organischen Inhaltsstoffen belastet sind, mittels körniger Aktivkohle gereinigt.

Durch dieses bekannte Verfahren wird die Entfernung organischer Stoffe, die biologisch schwer abbaubar sind oder biologische Vorgänge stören, ermöglicht. Derartige Abwässer können beispielsweise bei Kokerei-, Kohlevergasungsanlagen, sowie Anlagen der Erdöl-, Stahl- und chemischen Industrie anfallen.

Die Reinigung dieser Abwässer geschieht bekannterweise in einem im Gegenstrom durchströmten Wanderschichtadsorber spezieller Konstruktion, wobei das Abwasser von unten nach oben und die Aktivkohle von oben nach unten geführt wird.

Aus dem Dokument Seifen-Öle-Fette-Wasche, 108. Jahrgang Nr. 8/1982 Verlag für chem. Industrie, Augsburg, Seiten 237-239 ist ein Sandfilter bzw. eine Vorrichtung zum kontinuierlichen Kontaktieren einer flüssigen Phase mit einer festen Phase im Gegenstrom bekannt.

Andere bekannte Anwendungen des Kontaktierens einer flüssigen Phase mit einer festen Phase sind beispielsweise die Reinigung von organischen Lösungen, Reaktionen in Lösungen an festen Katalysatoren, die naßmetallurgische Gewinnung von Metallen, die Gewinnung pflanzlicher Öle aus Ölsaat o.ä.

Aus der Zeitschrift Chem.Ind. XXVII/Juni 1975, Seiten 309 bis 371 ist eine Vorrichtung zum Kontaktieren von flüssigen mit festen Phasen bekannt, mittels welcher Abwässer an Aktivkohle aus Steinkohle regeneriert werden.

Die zu verwendende Aktivkohle wird in dieser säulenartigen Vorrichtung von oben nach unten im Gegenstrom zu dem Abwasserstrom geführt. Am Ort des Eintritts des Abwassers wird dabei die Aktivkohle über eine Engstelle geführt.

Die verbrauchte Aktivkohle wird anschliessend an dem unteren Ende der Säule aus dem Abwasserstrom geführt und mittels einer axial zu der Säule angeordneten Rohrleitung kontinuierlich im Gemisch mit Wasser der Regenerationsstufe zugeführt.

Bei der Anwendung dieser Vorrichtung zur Reinigung von Abwässern unter Verwendung von körnigen Aktivkohlen, die eine breite Teilchengrößenverteilung aufweisen, ergeben sich nachteiligerweise unterwünschte Verstopfungen an der Austragsvorrichtung für die gebrauchte Aktivkohle.

Aufgabe der Erfindung ist eine Vorrichtung, die einen gleichmässigen Strom der festen Phase, z.B. körniger Aktivkohle ermöglicht, sowie in dem Feststoffstrom wenig oder keine Hindernisse aufweist.

Gegenstand der Erfindung ist eine Vorrichtung zum kontinuierlichen Kontaktieren einer flüssigen Phase mit einer festen Phase im Gegenstrom, bestehend aus einer Säule (1), einem an der Säule angeordneten Anströmring (2) für die flüssige Phase, einem konischen Säulenboden (3), einer Austragsöffnung (4) für die feste Phase unterhalb des Anströmrings (2) für die flüssige Phase sowie einer mit der Austragsöffnung (4) für die feste Phase in Verbindung stehenden Mammutpumpe (7) und einem Überlauf (9) für die flüssige Phase, welche dadurch gekennzeichnet ist, daß eine Ausschlämmvorrichtung bestehend aus der am unteren Ende des konischen Säulebodens (3) angeordneten Austragsöffnung (4) und zwei Leitungen (5, 6) zur Zufuhr von flüssiger Phase vorgesehen ist, daß die Ausschlämmvorrichtung mit der außerhalb der Säule (1) angeordneten Mammutpumpe (7) verbunden ist, daß die eine Leitung (5) im Säulenboden (3) auf die Austragsöffnung (4) gerichtet ist sowie die andere Leitung (6) unterhalb der Austrägsöffnung (4) zur Mammutpumpe (7) hin ausgerichtet ist, und daß die beiden Leitungen (5, 6) über eine Leitung (8) mit dem Anströmring (2) verbunden sind.

Ein weiterer Gegenstand der Erfindung ist ein Verfahren zum kontinuierlichen Kontaktieren einer flüssigen Phase mit einer festen Phase mit Gegenstrom mittels der erfindungsgemässen Vorrichtung, welches dadurch gekennzeichnet ist, daß man den Austrag des Feststoffes intermittierend durch gleichzeitige, stoßweise Aufgabe der Förderflüssigkeit zur Ausschlämmvorrichtung und des Fördergases zur Mammutpumpe 7 durchführt.

Den Austrag des Festoffes kann man mittels des Niveaureglers 13, der beim Anstieg des Feststoffniveaus in der Säule 1 ein Signal an den Intervallschalter 12 gibt, steuern.

Zusätzlich kann man während der Austragperiode einen oder mehrere Unwuchtmotoren 20, die an der Wand der Säule 1 und/oder dem Säulenboden 3 angeordnet sind, betreiben.

Die erfindungsgemäße Vorrichtung und das erfindungsgemäße Verfahren werden anhand der Zeichnung erläutert:

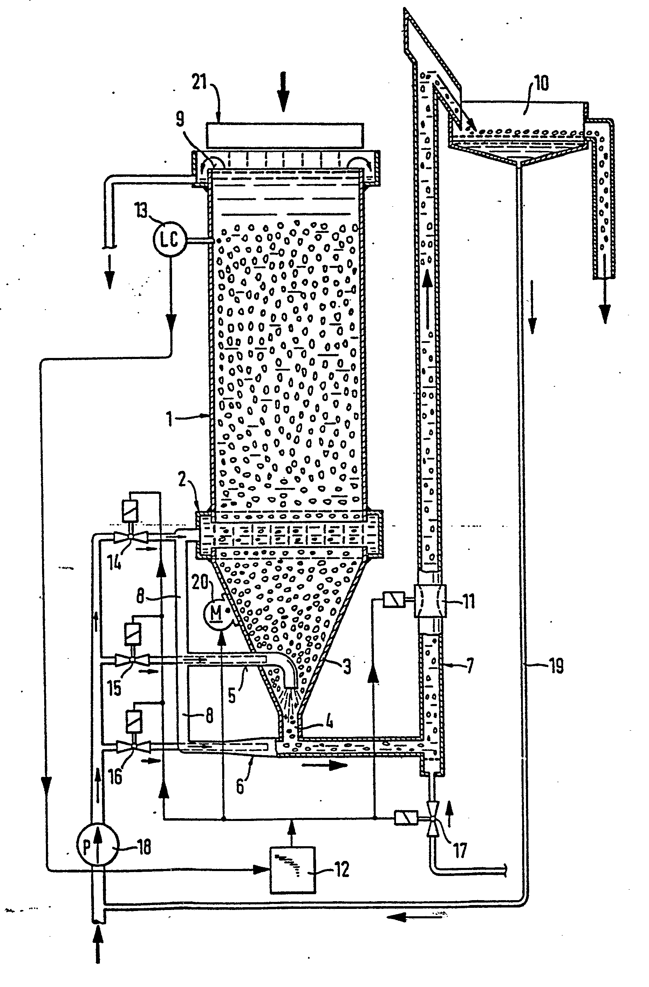

Gemäß Figur 1 wird die feste Phase beispielsweise körnige Aktivkohle, an dem oberen Ende der Säule 1 aufgegeben, von wo sie auf Grund der Schwerkraft nach unten sinkt.

Die flüssige Phase, zum Beispiel industrielles Abwasser, wird über den Anströmring 2 in die Säule 7 eingeführt. Sie fließt im Gegenstrom zu der festen Phase zu dem oberen Ende der Säule 1 und wird an dem überlauf für die flüssige Phase 9 aus der Säule 1, im Beispiel des Abwassers in gereinigter Form entfernt.

Die feste Phase wird an dem unteren Ende der Säule 1 mittels dem konisch angeordneten Säulenbodens 3 zu der Austragsöffnung 4 für die feste Phase geführt. Der konisch angeordnete Säulenboden 3 bzw. die Wandung der Säule 1 kann dabei mittels eines oder mehrere Unwuchtmotoren 20 gerüttelt werden.

Die Austragsöffnung 4 ist mit der Leitung 6, die wiederum mit der Mammutpumpe 7 verbunden ist, verbunden. In Intervallen wird über die Leitung 5, welche in dem konisch angeordneten Säulenboden 3 hineinführt, ein Teil der flüssigen Phase in die Säule eingeführt.

Gleichzeitig mit diesem Impuls der flüssigen Phase kann die Zufuhr an flüssiger Phase zu dem Anströmring 2 ganz oder teilweise unterbrochen werden, während ebenfalls gleichzeitig über die Leitung 8 ein Teil des Impulsstromes der flüssigen Phase durch die Leitung 6 zu der Mammutpumpe 7 geführt wird. Dadurch wird die feste Phase nach Durchschreiten der Austragsöffnung 4 in die Mammutpumpe 7 und mit dieser zu der Trennvorrichtung 10 gefördert.

Dort wird die flüssige Phase von der festen Phase getrennt, wobei die feste Phase gegebenenfalls nach einer Aufbereitung, z.B. einer Reaktivierung der Aktivkohle, an dem oberen Ende der Säule 1 aufgegeben werden kann.

Die abgetrennte flüssige Phase kann über die Leitung 19 dem Kreislauf der flüssigen Phase auf der Saugseite der Pumpe 18 zugeführt werden.

Die Zufuhr der flüssigen Phase zu der erfindungsgemäßen Vorrichtung erfolgt durch die Förderpumpe 18. Der Eintrag des Feststoffes (Aktivkohle) in die Säule 1 erfolgt an der Spitze der Säule 1 über eine Dosiervorrichtung 21, wie z.B. eine Bandwaage oder eine Dosierschnecke.

Der Feststoffaustrag aus dem konischen Säulenboden 3 wird durch den kontinuierlichen Betrieb von Mammutpumpe 7 und der Ausschlämmvorrichtung (dargestellt durch die Leitungen 4,5 und 6) bewirkt. Dabei werden gleichzeitig die Ventile 11, 15, 16 und 17 geöffnet und das Ventil 14 ganz oder teilweise geschlossen. Hierdurch wird über die Ventile 15 und 16 Förderflüssigkeit in den unteren Teil der Säule 1 - dem Säulenboden 3-und über das Ventil 17 Fördergas (z.B. Luft) in die Mammutpumpe 7 eingelassen. Die Betätigung der Ventile - die elektrisch, pneumatisch oder hydraulisch - erfolgen kann, wird durch den Intervallschalter 12 gesteuert. Dieser ist so eingerichtet, daß sowohl die Öffnungszeiten der Ventile (Impulsdauer) als auch - falls mehrere Impulse bei schwierigen Förderbedingungen erforderlich sind - die Zwischenzeiten eingestellt werden können. Der Feststoffstrom wird durch den Niveauregler 13 geregelt, der beim Anstieg des Feststoffniveaus ein Signal an den Intervallschalter 12 gibt.

Die erfindungsgemäße Vorrichtung weist den Vorteil auf, daß an der Austragsöffnung der Säule kein unerwünschtes Zusammenbacken der festen Phase und somit ein Verstopfen der Austragsöffnung eintritt. Die feste Phase kann, weil keine störenden Einbauten in der Vorrichtung vorhanden sind, gleichmässig auf Grund der Schwerkraft nach unten rutschen.

## Patentansprüche

1. Vorrichtung zum kontinuierlichen Kontaktieren einer flüssigen Phase mit einer festen Phase im Gegenstrom, bestehend aus einer Säule (1), einem an der Säule angeordneten Anströmring (2) für die flüssige Phase, einem konischen Säulenboden (3), einer Austragsöffnung (4) für die feste Phase unterhalb des Anströmrings (2) für die flüssige Phase sowie einer mit der Austragsöffnung (4) für die feste Phase in Verbindung stehenden Mammutpumpe (7), und einem überlauf (9) für die flüssige Phase, dadurch gekennzeichnet, daß eine Ausschlämmvorrichtung bestehend aus der am unteren Ende des konischen Säulenbodens (3) angeordneten Austragsöffnung (4) und zwei Leitungen (5, 6) zur Zufuhr von flüssiger Phase vorgesehen ist, daß die Ausschlämmvorrichtung mit der außerhalb der Säule (1) angeordneten Mammutpumpe (7) verbunden ist, daß die eine Leitung (5) im Säulenboden (3) auf die Austragsöffnung (4) gerichtet ist sowie die andere Leitung (6) unterhalb der Austragsöffnung (4) zur Mammutpumpe (7) hin ausgerichtet ist, und daß die beiden Leitungen (5,6) über eine Leitung (8) mit dem Anströmring (2) verbunden sind.

2. Verfahren zum kontinuierlichen Kontaktieren einer flüssigen Phase mit einer festen Phase im Gegenstrom mittels einer Vorrichtung gemäß Anspruch 1, dadurch gekennzeichnet, daß man den Austrag des Feststoffes intermittierend durch gleichzeitige, stoßweise Aufgabe der Förderflüssigkeit zur Ausschlämmvorrichtung und des Fördergases zur Mammutpumpe (7) durchführt.

3. Verfahren nach Anspruch 2, dadurch gekennzeichnet, daß man den Austrag des Feststoffes mittels des Niveaureglers (13), der beim Anstieg des Feststoffniveaus in der Säule (1) ein Signal an den Intervallschalter (12) gibt, steuert.

4. Verfahren nach den Ansprüchen 2 oder 3, dadurch gekennzeichnet, daß man während der Austragperiode einen oder mehrere Unwuchtmotoren (20), die an der Wand der Säule (1) und/ oder dem Säulenboden (3) angeordnet sind, betreibt.

## Claims

1. An apparatus for continuously contacting a liquid phase with a solid phase in counter-current, comprising a column (1), a flow-in ring (2) for the liquid phase, arranged on the column, a conical column base (3), an outlet opening (4) for the solid phase below the flow-in ring (2) for the liquid phase as well as an air lift pump (7) communicating with the outlet opening (4) for the solid phase, and an overflow (9) for the liquid phase, characterised in that a cleansing apparatus comprising the outlet opening (4) arranged at the lower end of the conical column base (3) and two conduits (5,6) for the supply of liquid phase is provided, in that the cleansing apparatus is connected to the air lift pump (7) arranged outside the column (1), in that one conduit (5) in the column base (3) is directed towards the outlet opening (4) and the other conduit (6) below the outlet opening (4) is orientated towards the air lift pump (7) and in that the two conduits (5, 6) are connected to the flow-in ring (2) via a conduit (8).

2. A process for continuously contacting a liquid phase with a solid phase in counter-current using an apparatus according to claim 1, characterised in that the solid is discharged intermittently by the simultaneous, batch-wise charging of the carrier liquid into the cleansing apparatus and of the carrier gas into the air lift pump (7).

3. A process according to claim 2, characterised in that the solid material is discharged by means of the level regulator (13) which transmits a signal to the interval switch (12) when the level of solid material in the column (1) rises.

4. A process according to claims 2 or 3, characterised in that one or more unbalance motors (20) which are arranged on the wall of the column (1) and/or on the column base (3) is or are operated during the discharge period.

**Revendications**

1) Dispositif pour la mise en contact continue d'une phase liquide avec une phase solide, à contre-courant, constitué d'une colonne (1), d'un anneau de distribution (2) de la phase liquide, monté sur la colonne, d'un fond conique (3) de la colonne, d'un orifice de sortie (4) de la phase solide, placé en-dessous de l'anneau de distribution (2) de la phase liquide, ainsi que d'une pompe mammouth (7) qui communique avec l'orifice de sortie (4) de la phase solide, et un trop-plein (9) pour la phase liquide, dispositif caractérisé en ce qu'il est prévu un dispositif d'ébourbage, constitué par l'orifice de sortie (4) placé à l'extrémité inférieure du fond conique (3) de la colonne, et deux conduites (5, 6) pour l'alimentation en phase liquide, et que le dispositif de débourbage est relié avec la pompe mammouth (7) montée à l'extérieur de la colonne (1), que l'une des conduites (5) est dirigée, dans le fond (3) de la colonne, vers l'orifice de sortie (4), l'autre conduite (6) étant dirigée en-dessous de l'orifice de sortie (4) vers la pompe mammouth (7), les deux conduites (5, 6) etant reliées par une conduite (8) avec l'anneau de distribution (2).

2) Procédé pour la mise en contact continu d'une phase liquide avec une phase solide, à contre-courant, au moyen d'un dispositif suivant la revendication 1, caractérisé en ce que l'on provoque la sortie de la matière solide par intermittences en envoyant en même temps, par à-coups, le liquide de transport vers le dispositif de débourbage et le gaz d'entrainement vers la pompe mammouth (7).

3) Procédé suivant la revendication 2, caractérisé en ce que l'on commande la sortie de la matière solide au moyen du régulateur de niveau (13), qui émet un signal vers le commutateur périodique (12) quand le niveau de matière solide monte dans la colonne (1).

4) Procédé suivant les revendications 2 et 3, caractérisé en ce que pendant la période de sortie, on fait fonctionner un ou plusieurs moteurs à balourd (20), qui sont disposés sur la paroi de la colonne (1) et/ou du fond (3) de cette colonne.